(19) Europäisches Patentamt / European Patent Office / Office européen des brevets

(11) **EP 4 019 878 B1**

(12) **FASCICULE DE BREVET EUROPEEN**

(45) Date de publication et mention de la délivrance du brevet:
**12.04.2023  Bulletin 2023/15**

(21) Numéro de dépôt: **21215917.2**

(22) Date de dépôt: **20.12.2021**

(51) Classification Internationale des Brevets (IPC):
***F28D 20/02*** *(2006.01)*

(52) Classification Coopérative des Brevets (CPC):
**F28D 20/021; F28F 13/003;** Y02E 60/14

(54) **MODULE DE STOCKAGE THERMIQUE A MATÉRIAU A CHANGEMENT DE PHASE DONT LA FABRICATION EST SIMPLIFIÉE**

THERMISCHES SPEICHERMODUL AUS PHASENWECHSELMATERIAL, DESSEN HERSTELLUNG VEREINFACHT IST

HEAT STORAGE MODULE WITH PHASE-CHANGE MATERIAL MADE THROUGH SIMPLIFIED PRODUCTION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **23.12.2020   FR 2014038**

(43) Date de publication de la demande:
**29.06.2022   Bulletin 2022/26**

(73) Titulaires:
- **Commissariat à l'énergie atomique et aux énergies alternatives
  75015 Paris (FR)**
- **Grims
  38280 Villette d'Anthon (FR)**

(72) Inventeurs:
- **VESIN, Sébastien
  38054 Grenoble CEDEX 09 (FR)**
- **BENTIVOGLIO, Fabrice
  38054 GRENOBLE Cedex 09 (FR)**
- **COUTURIER, Raphael
  38054 GRENOBLE Cedex 09 (FR)**
- **GRIMAUD, Cyrille
  38280 VILLETTE D'ANTHON (FR)**
- **GRIMAUD, Louane
  38280 VILLETTE D'ANTHON (FR)**

(74) Mandataire: **Brevalex
Tour Trinity
1 Bis Esplanade de La Défense
CS 60347
92035 Paris La Défense Cedex (FR)**

(56) Documents cités:
| | |
|---|---|
| **EP-A1- 2 904 343** | **EP-B1- 2 904 343** |
| **WO-A1-2015/189450** | **WO-A1-2016/051377** |
| **CN-A- 111 765 791** | |

**Description**

**DOMAINE TECHNIQUE ET ÉTAT DE LA TECHNIQUE ANTÉRIEURE**

La présente invention se rapporte à un système de stockage de chaleur par matériau à changement de phase à fabrication simplifiée.

Les systèmes de stockage de chaleur par matériau à changement de phase trouvent leur application dans de nombreux domaines, par exemple dans le stockage de chaleur dans les centrales solaires et dans les réseaux de chaleur et/ou de froid, les réseaux urbains, les réseaux industriels.

Les systèmes de stockage thermiques particulièrement intéressants sont les systèmes mettant en oeuvre un échangeur à tubes et à calandre comportant une calandre ou cuve remplie de matériau à changement de phase et des tubes traversant la cuve et connectés à une source de caloporteur. Le caloporteur, en circulant dans les tubes, échange de la chaleur avec le matériau à changement de phase. Lors d'une phase de charge, le fluide caloporteur arrive à une température supérieure à la température de fusion du matériau à changement de phase et cède de l'énergie à celui-ci, ce qui entraîne la fusion du matériau à changement de phase, le caloporteur sort du système à une température inférieure à sa température d'entrée. Lors d'une phase de décharge, le fluide caloporteur entre dans le système à une température inférieure à la température de fusion du matériau à changement de phase et récupère l'énergie précédemment stockée, ce qui entraîne la solidification du matériau à changement de phase. Le fluide caloporteur sort du système à une température supérieure à sa température d'entrée.

Or, les matériaux à changement de phase ont pour inconvénient de présenter une faible conductivité thermique, par exemple dans le cas de l'octadecanol dans la conductivité thermique moyenne est de l'ordre de 0,3 W/mK, valeur typique des matériaux faiblement conducteurs, voire thermiquement isolant.

Il faut donc optimiser La conduction thermique entre le fluide caloporteur et le matériau à changement de phase. L'une des méthodes usuellement utilisée pour cela est le stockage de type tube et calandre constitué d'une cuve intégrant un faisceau de tubes souvent munis d'ailettes pour diffuser la chaleur. Cependant, afin de conserver un coût de revient raisonnable, les tubes à ailettes utilisés sont souvent des tubes à ailettes standards notamment dans le domaine de la pétrochimie présentant des ailettes de diamètre relativement faible, par exemple de l'ordre de 5 cm, ce qui implique d'utiliser un grand nombre de tubes à ailettes pour suffisamment diffuser la chaleur dans le matériau à changement de phase. Or ce grand nombre de tubes doit être assemblé aux plaques collectrices supérieures et inférieures de la calandre, par exemple par soudage ou dudgeonnage. Cela implique un temps de fabrication important et un coût de fabrication élevé. En outre les risques de fuite sont augmentés.

En outre, du fait de la circulation du fluide caloporteur dans un grand nombre de tubes, celui-ci a une vitesse réduite, ce qui peut dans certains cas nécessiter la mise en oeuvre de dispositifs spéciaux, appelés inserts, dans les tubes, complexifiant la fabrication des tubes et augmentant le coût du système de stockage thermique.

Le document EP2904343 décrit un système de stockage thermique comportant une calandre, des tubes et des inserts en aluminium rapportés sur la face extérieure des tubes et diffusant la chaleur au sein du matériau à changement de phase, ce qui permet de réduire le nombre de tubes. Cependant un jeu existe entre le tube et l'insert, ce qui pénalise le transfert thermique entre le tube et l'insert.

Le document CN 111765791 A montre un module pour stockage thermique comme dans le préambule de revendication 1.

**EXPOSÉ DE L'INVENTION**

C'est par conséquent un but de la présente invention d'offrir un module de stockage thermique à matériau à changement de phase de réalisation simplifiée et offrant des performances améliorées.

Le but énoncé ci-dessus est atteint par un module destiné au stockage thermique à matériau à changement de phase comportant une cuve, un ou plusieurs échangeurs thermiques comportant des extrémités de connexion pénétrant dans et débouchant de la cuve, une matrice poreuse à pores ouverts et à taux de vide élevé traversée par le ou les échangeurs thermiques et en contact intime avec la face extérieure des échangeurs thermiques, ladite matrice étant obtenue par moulage direct autour du ou des échangeurs thermiques, ladite matrice poreuse étant destinée à être remplie d'un matériau à changement de phase. La cuve comprend au moins une paroi formée par moulage directement sur la matrice.

Dans un exemple particulièrement avantageux, la paroi est dans le matériau métallique de la matrice et obtenue directement lors du moulage de la matrice.

Le fait de réaliser au moins une paroi de la cuve directement lors du moulage simplifie le procédé de fabrication.

Dans un autre exemple, la paroi est moulée sur la mousse après moulage de celle-ci, par exemple la paroi est dans un matériau différent, avantageusement en un matériau offrant des propriétés d'isolation thermique par rapport à la mousse. La paroi est par exemple en verre borosilicate ou en verre sodocalcique.

De manière très avantageuse cette paroi est traversée par les extrémités de connexion du ou des échangeurs thermiques. Il n'est alors plus requis de rapporter au moins une plaque d'extrémité sur les extrémités de connexion et de les assembler de manière étanche sur ceux-ci. Le procédé de fabrication est simplifié.

Dans un exemple, les échangeurs thermiques sont des tubes et les extrémités de connexion sont les extrémités des tubes. Dans un autre exemple, les échangeurs thermiques sont des plaques d'échangeurs, et les extrémités de connexion sont par exemple des tubes rapportés sur les bords des plaques et assurant l'alimentation et l'évacuation du fluide caloporteur. En variante, une chambre de distribution et une chambre de collecte sont prévues aux extrémités des plaques d'échangeur.

La mise en oeuvre d'une structure poreuse en matériau métallique assure une très bonne diffusion de la chaleur au sein du matériau à changement de phase. L'efficacité de la charge et de la décharge est améliorée. En outre, le nombre de tubes peut être réduit, ce qui permet de ne pas avoir à recourir à des inserts dans les tubes, et le coût de revient peut être réduit.

De manière très avantageuse, la matrice poreuse ou mousse comporte une première zone entre les tubes présentant une première porosité et en contact avec les tubes, et une deuxième zone de deuxième porosité entourant la première zone et de porosité sensiblement plus faible que la première porosité. Cette matrice assure une très bonne conduction thermique entre les tubes et la matrice en réduisant la quantité de matériau à changement de phase en contact avec les tubes, le matériau à changement de phase présentant une faible conductivité thermique. En d'autres termes les tubes sont entourés par une couche de matériau métallique faiblement poreux formant une surépaisseur autour des tubes et adhérant aux tubes. En outre la tenue de la structure métallique autour des tubes est améliorée.

Un exemple très avantageux, les modules selon l'invention sont facilement connectables fluidiquement entre eux et facilement empilables et/ou juxtaposables, les modules pouvant être très avantageusement réalisés en forme de parallélépipède.

Dans un exemple, la matrice est équipée, à au moins l'une de ses arêtes, d'un montant. Il est d'ailleurs de préférence mis en oeuvre plusieurs montants, par exemple quatre montants parallèles agencés au niveau des quatre arêtes orientées verticalement sur le module. Plusieurs fonctions peuvent être remplies par ces montants, soit intégrés directement aux arêtes de la matrice poreuse pendant le moulage de celle-ci, soit intégrés à cette matrice ultérieurement à son moulage. Les montants permettent de simplifier, voire de renforcer l'assemblage et la structure des modules de stockage thermique. D'autre part, les montants peuvent fournir une fonction mécanique de renforcement structural au module de stockage, notamment en permettant de répartir les contraintes sur un cadre rapporté. En outre, ces montants sont capables de conférer une meilleure résistance mécanique en cas d'empilement des modules, et/ou une tenue renforcée à la pression de la cuve. L'intégration de ces montants permet aussi de faciliter la pose et le bridage de parois pour former la cuve.

On peut prévoir de réaliser plus d'une face de la cuve directement lors du moulage par exemple toutes ses faces sauf une. Dans le cas d'une cuve de forme parallélépipédique, cinq des six faces peuvent être réalisées par moulage directement sur la matrice, la sixième face permettant le remplissage de la structure avec le matériau à changement de phase et permettant par exemple de ménager un volume pour permettre la libre variation de volume du matériau à changement de phase lors de ses changements de phase.

L'une des objets de la présente demande est un module pour stockage thermique par matériau à changement de phase comportant une cuve, au moins un échangeur thermique comportant des première et deuxième extrémités de connexion destinées à être connectées à un réseau de fluide caloporteur, lesdites première et deuxième extrémités de connexion pénétrant et débouchant de la cuve, une structure reçue dans la cuve et destinée à contenir un matériau à changement de phase, ladite structure comprenant une matrice poreuse à cellules communicantes traversée par ledit échangeur thermique et en contact avec la surface extérieure dudit échangeur thermique, ladite matrice étant obtenue par moulage autour dudit échangeur thermique, ladite cuve comprenant au moins une paroi en matériau formée par moulage directement sur la matrice poreuse.

Dans un mode de réalisation, la paroi est formée directement lors du moulage de la matrice et d'un seul tenant avec la matrice.

Dans un autre mode de réalisation, la paroi est formée sur la matrice après le moulage de celle-ci. La au moins une paroi est par exemple en un matériau présentant une conductivité thermique inférieure à celle de la matrice.

De préférence, ladite paroi est traversée par au moins la première extrémité dudit échangeur thermique.

Par exemple, la matrice poreuse est en matériau métallique, par exemple en aluminium ou alliage d'aluminium.

Dans un exemple avantageux, la matrice comporte une première zone de première porosité en contact avec la surface extérieure de l'échangeur thermique et une deuxième zone de deuxième porosité entourant la première zone, la deuxième porosité étant supérieure à la première porosité.

Le module peut comporter plusieurs échangeurs thermiques configurés pour être connectés en parallèle à un réseau de fluide caloporteur et dans lequel les premières extrémités de connexion sont connectées à une nourrice hydraulique et les deuxièmes extrémités de connexion sont connectées à une deuxième nourrice hydraulique.

Par exemple, ledit échangeur thermique est un tube. Le tube peut être configuré de sorte à serpenter dans la matrice.

Dans un exemple, le module comporte plusieurs tubes, chaque tube étant contenu dans un plan, lesdits plans étant sensiblement verticaux, et lesdits tubes sont configurés pour être connectés en parallèle à un réseau de fluide caloporteur.

Dans un autre exemple, le module comporte plusieurs tubes, chaque tube (étant contenu dans un plan, lesdits plans étant sensiblement horizontaux et dans lequel lesdits tubes sont connectés en série. De préférences, les tubes sont connectés par des connecteurs disposés à l'extérieur de la matrice.

Avantageusement, la matrice est de forme parallélépipédique. La cuve comporte avantageusement cinq parois en contact avec une face de la matrice et une paroi distante d'une face de matrice de sorte à ménager un volume libre entre ladite face et ladite paroi. Le volume libre peut former un ciel de gaz inerte et/ou une zone tampon pour la dilatation du matériau à changement de phase.

De préférence, lesdites cinq parois sont en matériau métallique formées directement lors du moulage et d'un seul tenant avec la matrice ou sont formées sur la matrice après moulage de celle-ci.

Un autre objet de la présente demande est un système de stockage thermique comportant au moins un module selon l'invention et du matériau à changement de phase remplissant les cellules de la matrice.

Ledit module peut comporter au moins deux échangeurs thermiques et chaque échangeur peut être alimenté par un fluide caloporteur différent ou provenant d'un réseau de chaleur différent.

Avantageusement, le système de stockage thermique comporte plusieurs modules, une partie des modules étant empilée et/ou une autre partie des modules étant juxtaposée. Par exemple, les modules sont connectés à un réseau de fluide caloporteur en parallèle. Un autre objet de la présente demande est un procédé de fabrication d'un module selon l'invention, comportant :

- la fourniture d'une préforme comprenant des plaques de noyaux et au moins un échangeur thermique entre les noyaux,
- mise en place de la préforme dans un moule,
- introduction d'un métal liquide dans la préforme,
- solidification du métal,
- retrait des noyaux.

La préforme peut comporter un volume libre entre les noyaux et l'échangeur thermique. D'autres avantages et caractéristiques de l'invention apparaîtront dans la description détaillée non limitative ci-dessous.

## BRÈVE DESCRIPTION DES DESSINS

La présente invention sera mieux comprise sur la base de la description qui va suivre et des dessins en annexe sur lesquels:

[Fig. 1A] est une représentation schématique d'une vue en coupe longitudinale d'un exemple de module de stockage thermique à matériau à changement de phase d'un système de stockage thermique.

[Fig. 1B] est une représentation schématique de la structure interne du module de la figure 1A.

[Fig. 1C] est une photographie d'un exemple de matrice pouvant être mise en oeuvre dans le module de stockage thermique.

[Fig. 2] est une représentation schématique d'un autre exemple d'une partie d'un module d'un système de stockage thermique selon l'invention.

[Fig. 3] est une représentation schématique d'un autre exemple d'une partie d'un module d'un système de stockage thermique selon l'invention, dans lequel une partie des parois du module est réalisée lors du moulage de la matrice.

[Fig. 4] est une représentation schématique d'un autre exemple d'une partie d'un module d'un système de stockage thermique selon l'invention, dans lequel une partie des parois du module est également réalisée lors du moulage de la matrice et dont le milieu poreux n'occupe pas toute la hauteur entre les parois.

[Fig. 5] est une représentation schématique d'un autre exemple d'une partie d'un module d'un système de stockage thermique selon l'invention, les tubes de caloporteur étant en forme de serpentin.

[Fig. 6] est une représentation schématique d'un autre exemple d'une partie d'un module d'un système de stockage thermique selon l'invention, les tubes de caloporteur étant également en forme de serpentin.

[Fig. 7] est représentation schématique d'un autre exemple d'une partie d'un module d'un système de stockage thermique selon l'invention, dans lequel les tubes sont hélicoïdaux.

[Fig. 8] est une représentation schématique d'une variante du module de la figure 7, dans laquelle la matrice poreuse est de forme cylindrique.

[Fig. 9] est une représentation schématique d'un système de stockage thermique comportant plusieurs modules.

[Fig. 10A]
[Fig. 10B]
[Fig. 10C]
[Fig. 10D]
[Fig. 10E]

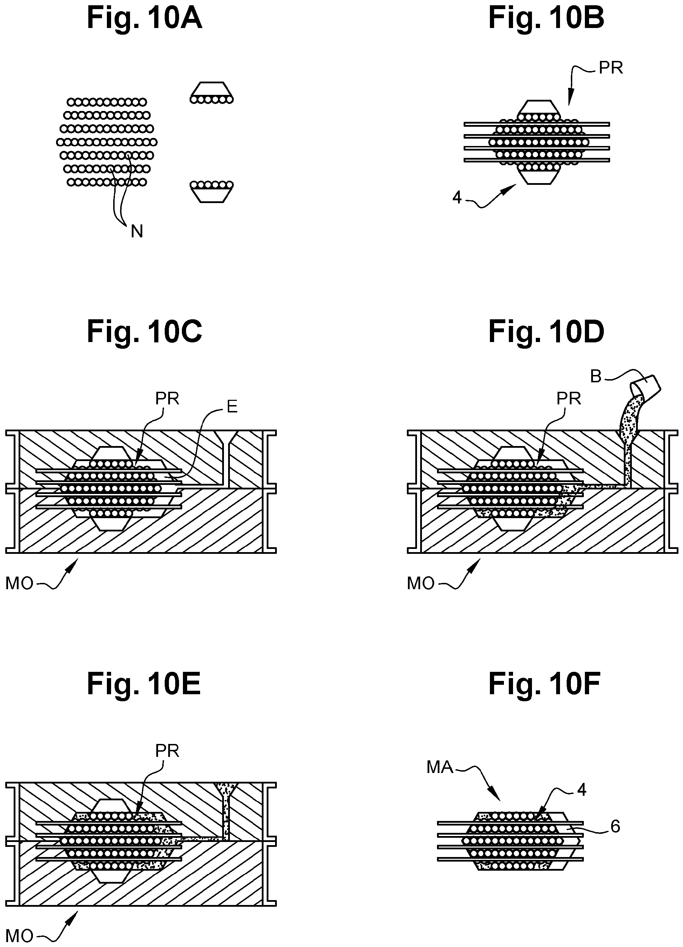

[Fig. 10F] sont des représentations schématiques de différentes étapes d'un exemple procédé de fabrication d'un module de stockage thermique.

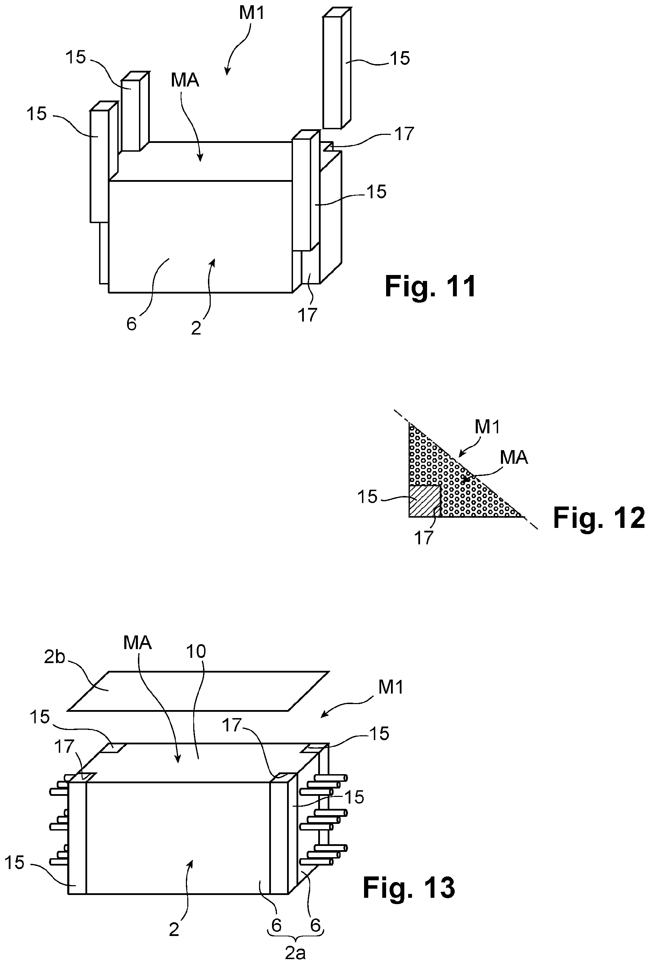

[Fig. 11] est une vue en perspective d'un module de stockage thermique, selon un autre mode de réalisation préféré de l'invention.

[Fig. 12] est une vue en coupe longitudinale du module montré sur la figure 11.

[Fig. 13] est une vue en perspective d'un module de stockage thermique, selon une alternative.

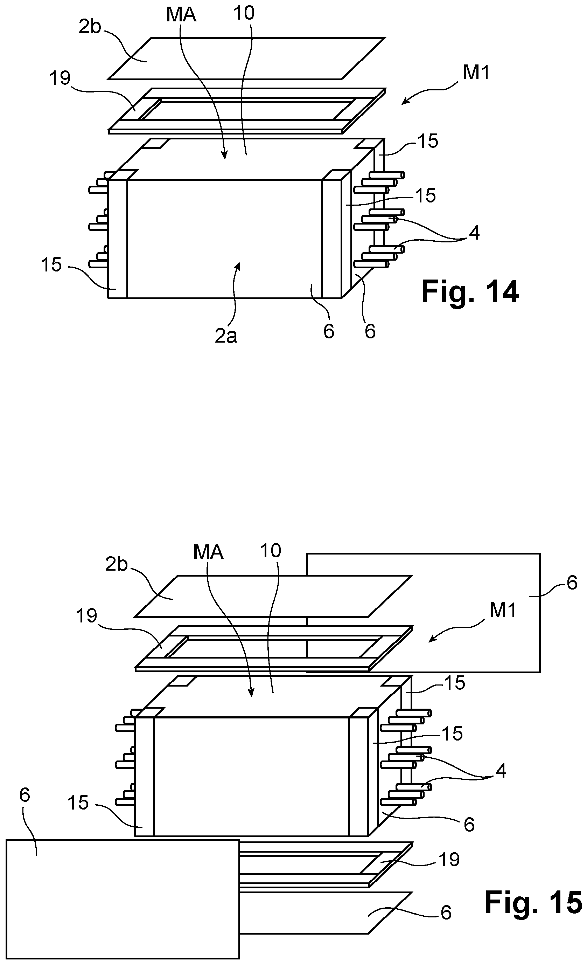

[Fig. 14] est une vue en perspective d'un module de stockage thermique, selon une autre alternative.

[Fig. 15] est une vue en perspective d'un module de stockage thermique, selon encore une autre alternative.

## EXPOSÉ DÉTAILLÉ DE MODES DE RÉALISATION PARTICULIERS

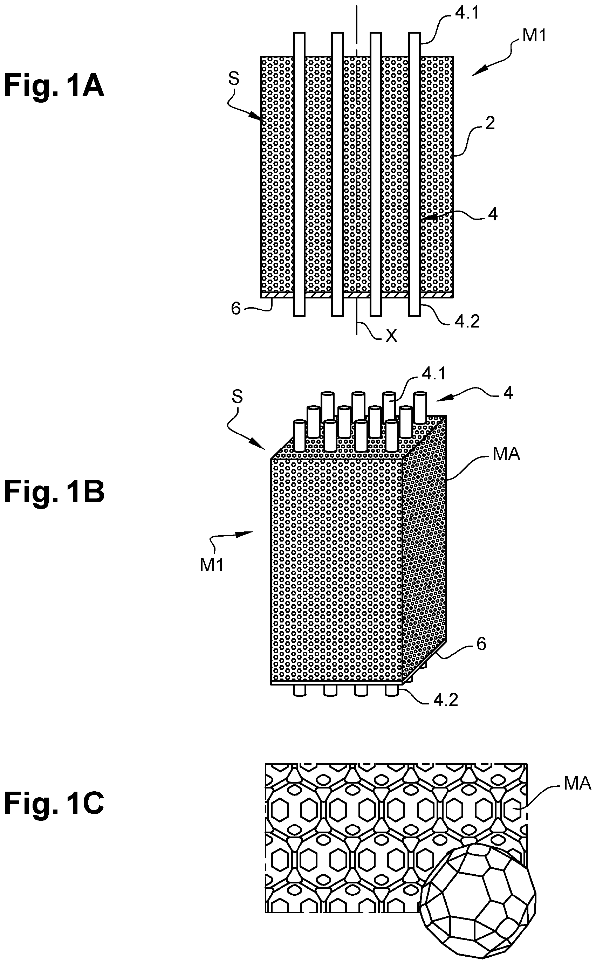

Sur la figure 1A, on peut voir une vue en coupe longitudinale d'un exemple de module de stockage thermique M1 à matériau à changement de phase d'un système de stockage thermique.

Un système de stockage thermique peut comporter un ou plusieurs modules de stockage thermique comme cela sera décrit ci-dessous.

Le module M1 comporte une calandre ou cuve 2 s'étendant selon un axe longitudinal X, des tubes 4 disposés dans la cuve 2, dans cet exemple les tubes 4 s'étendent le long de la direction longitudinale X, une structure S dans la cuve, traversée par les tubes 4 et contenant un matériau à changement de phase MCP. Une extrémité des tubes 4 est destinée à être reliée à une source de fluide caloporteur chaud ou à un système d'utilisation d'un fluide caloporteur chaud, et une extrémité des tubes est destinée à être reliée à un réservoir de caloporteur froid ou à un système d'utilisation d'un fluide caloporteur froid.

Généralement, les faces extérieures de la cuve du module sont recouvertes d'un matériau isolant thermique formant un calorifuge (non représenté) pour réduire les pertes thermiques du module vers l'extérieur.

Dans la présente demande, on entend par « fluide colporteur chaud » un fluide caloporteur à une température supérieure à la température de fusion du matériau à changement de phase, il est donc apte à céder de l'énergie au matériau à changement de phase, et par « fluide caloporteur froid » un fluide caloporteur à une température inférieure à la température de cristallisation du matériau à changement de phase, il est donc apte à extraire de l'énergie du matériau à changement de phase.

A des fins de simplicité, le matériau à changement de phase sera désigné par matériau MCP dans la suite de la description.

Par exemple le matériau MCP est choisi parmi les paraffines, les alcools gras, les acides gras, les alcools de sucre, les hydrates de sel...

Le fluide caloporteur peut être liquide lorsqu'il est chaud et lorsqu'il est froid, le fluide ne change alors pas de phase lors des phases de charge et décharge du module, ou être sous forme vapeur lorsqu'il est chaud et liquide lorsqu'il est froid, un changement de phase du caloporteur ayant alors lieu lors des phases de charge et de décharge.

Sur la figure 1B, on peut voir représenté schématiquement la structure S du module stockage de la figure 1A.

La structure S comporte une matrice MA en mousse alvéolaire, poreuse, pouvant être métallique. Cette mousse est composée d'une pluralité d'alvéoles ouvertes, communicantes entre elles et débouchant sur l'extérieur de la matrice. La structure alvéolaire est une structure stochastique ou une structure régulière, ordonnée et homogène ou non. Les cellules sont par exemple des zonoèdres, par exemple des cellules de Kelvin, qui ont une forme d'octaèdre tronqué, et son reliées entre elles par des brins. Sur la figure 1C on peut voir une représentation d'un exemple de matrice. Le diamètre moyen des cellules peut être compris entre 10 mm et 100 mm et les brins ont une épaisseur de quelques mm.

La matrice MA peut aussi comporter des alvéoles présentant des variantes géométriques les unes par rapport aux autres. Les alvéoles peuvent présenter d'autres formes, cylindriques, parallélépipédiques, à base polyédriques, notamment à base octogonale, ou carrée ou autre.

De préférence, les pores ont un diamètre moyen compris entre 10 mm et 100 mm. De préférence également, l'épaisseur des brins est de l'ordre de quelques millimètres.

Dans un mode de réalisation, le matériau de la matrice est métallique, par exemple en aluminium, en alliage d'aluminium, en alliage à base de nickel ou en fonte d'acier. Les matériaux métalliques présentent l'avantage d'offrir une conductivité thermique élevée. Dans un autre mode de réalisation, la matrice est réalisée en un matériau non métallique, par exemple en verre borosilicate, en verre sodocalcique, en composite ou en tout autre matériau compatible avec le procédé de fabrication décrit et mis en oeuvre pour obtenir la matrice MA. Le matériau est choisi de sorte à être compatible avec le matériau MCP et de sorte à être compatible avec les températures de fonctionnement du système de stockage.

La matrice MA est réalisée par surmoulage monobloc et monocouche autour des tubes 4 assurant ainsi une grande adhésion entre la matrice poreuse MA et les tubes 4, améliorant le transfert de chaleur des tubes vers la structure et de la structure vers les tubes. La matrice MA est réalisée par un procédé de moulage mettant en oeuvre une préforme réalisée à partir de noyaux. Un exemple de procédé de fabrication sera décrit ci-dessous.

Les tubes peuvent être en acier carbone, en acier inoxydable ou tout autre métal présentant une température de fusion suffisante pour tenir à la température de fusion du matériau de la matrice lors du procédé de moulage.

La mise en oeuvre d'une matrice poreuse pour diffuser la chaleur dans le matériau MCP ou pour l'en extraire permet de réduire, voire supprimer les zones de matériau MCP qui seraient difficilement accessibles thermiquement et ne participeraient donc pas au stockage thermique.

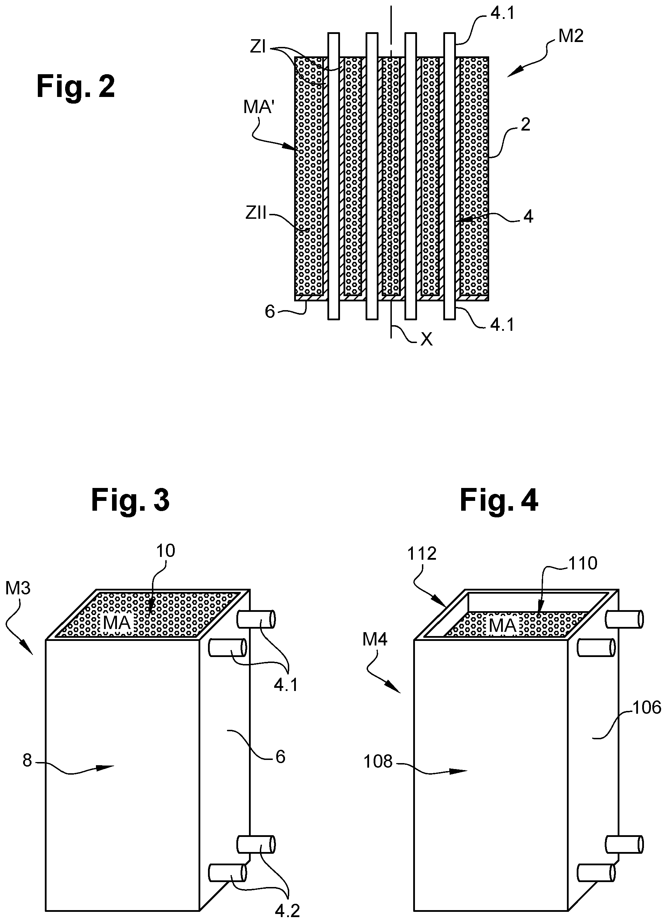

De manière très avantageuse et comme cela est représenté sur la figure 2 montrant une vue en coupe transversale d'un exemple de module de stockage thermique M2, le moulage de la matrice MA' autour de tubes 4 est tel que les zones ZI de la matrice entourant les tubes et à proximité de ceux-ci présentent une porosité sensiblement plus faible que celles des zones éloignées ZII des tubes, formant une gaine de matériau métallique faiblement poreux entourant les tubes 4 et en contact avec ceux-ci. Les zones ZII de la matrice éloignées des tubes ont par exemple une porosité comprise entre 80% et 95% et la porosité des zones ZI est comprise par exemple entre 0% et quelques %.

La porosité d'une structure alvéolaire peut être calculée de la manière suivante : La masse $m_1$ de la structure alvéolaire est mesurée en kg. La structure alvéolaire est placée dans un récipient et entièrement immergée dans de l'eau qui est versée jusqu'à une graduation donnée. La masse $m_2$ de l'ensemble constitué par la structure alvéolaire et l'eau est mesurée en kg. Le récipient est vidé puis rempli uniquement d'eau jusqu'à ladite graduation. La masse $m_3$ d'eau est mesurée en kg.

Le volume de la structure alvéolaire $V_{sol}$ est déterminé en litre (I).

Le taux de vide $\varepsilon$ est calculé selon l'équation suivante, où $\rho$ est la masse volumique de l'eau en kg/l :

[Math 1]

$$\varepsilon = 1 - \frac{m_3 - (m_2 - m_1)}{\rho V_{sol}}$$

Les zones ZI de faible porosité permettent de réduire, voire supprimer, la présence de matériau MCP directement en contact avec les tubes, le matériau MCP présentant généralement une faible conductivité thermique. De plus ces zones ZI permettent d'améliorer les transferts thermiques dans les différentes directions de la matrice, ces zones entourant de manière homogène les tubes. La réalisation de ces zones ZI formant une surépaisseur sur les tubes est obtenue en réservant dans la préforme des volumes libres autour des tubes, ces volumes libres favorisant par ailleurs l'écoulement et la répartition du matériau en fusion à l'intérieur du moule lors de la coulée du métal liquide. La surépaisseur a par exemple une épaisseur de quelques millimètres. Par exemple, elle a une épaisseur entre 5 mm et 10 mm, pour des tubes de diamètre de 17,2 mm et d'épaisseur de 2 mm.

De préférence, on réalise les tubes en un matériau différent de celui de la matrice, le matériau des tubes étant apte à tenir la pression du fluide caloporteur, et adapté au fluide caloporteur.

Dans un mode de réalisation, la structure S comporte également au moins une paroi extérieure 6 de la calandre réalisée de manière monobloc avec la matrice poreuse et simultanément à celle-ci. La préforme et le moule sont conçus pour la formation de la paroi 6 lors du moulage de la matrice. La paroi extérieure 6 est formée du même matériau que la matrice MA et est en matériau plein, i.e. elle est telle qu'elle est étanche au matériau MCP. Le fait de réaliser la paroi dans le même matériau que celui de la matrice présente comme avantage de permettre une mise en oeuvre simplifiée. En outre, les difficultés liées à des différences de valeurs de coefficient de dilatation sont limitées. Dans un autre mode de réalisation, la paroi extérieure 6 est formée dans un matériau différent de celui de la matrice MA. Cette réalisation permet avantageusement d'avoir une paroi pleine 6 réalisée dans un matériau moins conducteur thermiquement que la matrice MA de sorte à limiter les pertes thermiques du module de stockage vers l'extérieur. La paroi extérieure 6 est réalisée dans un autre matériau compatible avec la réalisation de la matrice MA et qui lui permet de conserver ses qualités d'étanchéité au matériau MCP, de tenue mécanique à la pression exercée par l'intérieur du module de stockage, de compatibilité avec le matériau MCP dans la gamme des températures d'utilisation du module de stockage.

Par exemple, dans le cas où le matériau de la paroi 6 possède une température de fusion inférieure à celle du matériau de la matrice MA, le mode opératoire de réalisation du module peut consister à couler dans un premier temps le matériau en fusion composant la matrice MA puis de laisser refroidir la matrice MA jusqu'à ce que sa température soit inférieure à la température de fusion du matériau de la paroi 6 afin de couler dans un second temps le matériau en fusion composant de la paroi 6. Les préformes sont ainsi conçues pour délimiter les deux zones, i.e. la matrice MA et la paroi 6 et permettre la coulée des deux matériaux différents en deux étapes dans chacune des zones distinctes. Suivant un autre mode de réalisation, des préformes spécifiques à la réalisation de la paroi pleine 6 pourraient être rapportées à la suite de la réalisation de la matrice MA. Par exemple, la paroi 6 pourrait être en verre , par exemple en verre borosilicate, ou en verre sodocalcique, en matériau composite ou organique, par exemple en caoutchouc ou en tout autre matériau présentant avantageusement par exemple une plus faible conductivité thermique que la matrice MA, voire une meilleure résistance mécanique ou une meilleure aptitude à la déformation thermo mécanique ou une meilleure étanchéité au matériau MCP.

L'un des avantages de réaliser au moins une paroi en un matériau différent de celui de la matrice est d'utiliser un matériau moins conducteur thermique pour la paroi. Par exemple, la matrice MA peut être réalisée en alliages d'aluminium de fonderie qui présentent pour la plupart des conductivités thermiques à 20°C de l'ordre de 120 $W.m^{-1}.K^{-1}$ à 160 $W.m^{-1}.K^{-1}$.

A titre d'exemple, la conductivité thermique à 20°C de l'alliage d'aluminium de fonderie A-S7G06 est égale à 160 $W.m^{-1}.K^{-1}$ et celle de l'alliage d'aluminium A-S5U3G est égale à 120 $W.m^{-1}.K^{-1}$.

La paroi peut être réalisée en un matériau plus isolant thermique que l'aluminium et ses alliages, par exemple en verre borosilicate ayant une conductivité thermique à 20°C égale à 1,2 $W.m^{-1}.K^{-1}$ ou en fonte d'acier ayant une conductivité thermique à 20°C égale à 55 $W.m^{-1}.K^{-1}$.

La conductivité thermique des solides peut être mesurée directement ou indirectement, i.e. en mesurant leur diffusivité thermique, ce qui implique de connaître également leur masse volumique et leur chaleur spécifique. La mesure de la conductivité thermique peut s'effectuer par la méthode du fil chaud ou du hot disk, tandis que la mesure de la diffusivité thermique peut s'effectuer par la méthode (Laser) Flash.

De préférence, le matériau de la matrice et le matériau de la paroi 6 sont choisis de sorte que leurs coefficients de dilatation thermique soient suffisamment proches pour limiter les dilatations différentielles entre la matrice et la paroi.

Par exemple l'aluminium, l'acier et la fonte peuvent être utilisées pour former la matrice et/ou les parois pleines. Les valeurs de coefficients de dilatation linéaires en fonction de la température de matériaux sont données ci-dessous :

Aluminium : $23 \times 10^{-6}$ K$^{-1}$
Acier : $12 \times 10^{-6}$ K$^{-1}$
Fonte : $10{,}5 \times 10^{-6}$ K$^{-1}$

De manière particulièrement avantageuse et comme cela est représenté sur la figure 1B et la figure 2, la paroi extérieure 6 est traversée par au moins une extrémité des tubes 4. Sur la figure 3, on peut voir un autre exemple de module M3 dans lequel les deux extrémités 4.1, 4.2 des tubes 4 traversent la paroi 6.

Dans le cas où les extrémités des tubes traversent des parois distinctes, par exemple des parois opposées, les deux parois extérieures traversées pas les tubes peuvent être des parois pleines.

Les modules dans lesquels les tubes traversent la ou les parois pleines sont sensiblement plus simples à fabriquer que les systèmes existants car ils ne requièrent pas de rapporter une ou des plaques à fixer aux tubes par exemple par soudage ou dudgeonnage.

En variante, les parois pleines sont distinctes de celles traversées par les extrémités des tubes.

Sur la figure 3, le module comporte cinq de ses six parois extérieures réalisées d'un seul tenant avec la matrice poreuse MA ; la paroi 6 traversée par les extrémités des tubes et les autres parois désignées par la référence 8. Une face 10 de la matrice poreuse est laissée libre pour, d'une part permettre le remplissage de la matrice avec le matériau MCP, et d'autre part permettre la libre dilatation du matériau MCP lors de son changement d'état. Les pores de la matrice sont débouchants, ce qui permet au matériau MCP de pénétrer dans la matrice à partir de la face extérieure 10 de la matrice poreuse. Un ciel de gaz peut être ménagé au niveau de la paroi libre de la matrice poreuse, par exemple un ciel de gaz inerte dans le cas où le matériau MCP est sensible à l'oxydation dans les conditions d'exploitation du système de stockage.

Dans un autre mode de réalisation, les cinq des six parois sont réalisées par moulage sur la matrice dans un matériau différent de celui de la matrice.

En variante, les tubes débouchent par la face libre 10 de la matrice.

Sur la figure 4, on peut voir un module de stockage thermique M4 selon un exemple de réalisation dans lesquels les parois extérieures 106 et 108 bordant la surface libre 110 se prolongent avantageusement au-delà de la surface libre 110, de sorte à former un rebord 112 bordant la surface libre 110. Ce rebord 112 peut avantageusement délimiter un réservoir pour le matériau MCP.

Lorsque le matériau MCP se dilate lors de sa fusion, le matériau MCP sort alors par la surface libre de la matrice poreuse et ce réservoir permet de contenir le matériau MCP lorsqu'il passe à l'état liquide.

En outre ce rebord 112 permet avantageusement la fixation d'un couvercle (non représenté) pour fermer le volume de manière étanche ou non, délimitant un ciel de gaz inerte ou non et facilitant la manipulation du module de stockage thermique.

Dans les modules M1 et M2, les tubes 4 sont rectilignes et le fluide caloporteur ne circule que selon un sens de direction lors d'une phase de charge ou de décharge.

De manière avantageuse, les tubes sont tels que le module a une configuration hydraulique en multi-passes, i.e. le fluide caloporteur dans chaque tube circule successivement lors de son écoulement dans la matrice poreuse dans des sens différents, par exemple opposés entre les deux extrémités du tube pendant une phase de charge et de décharge.

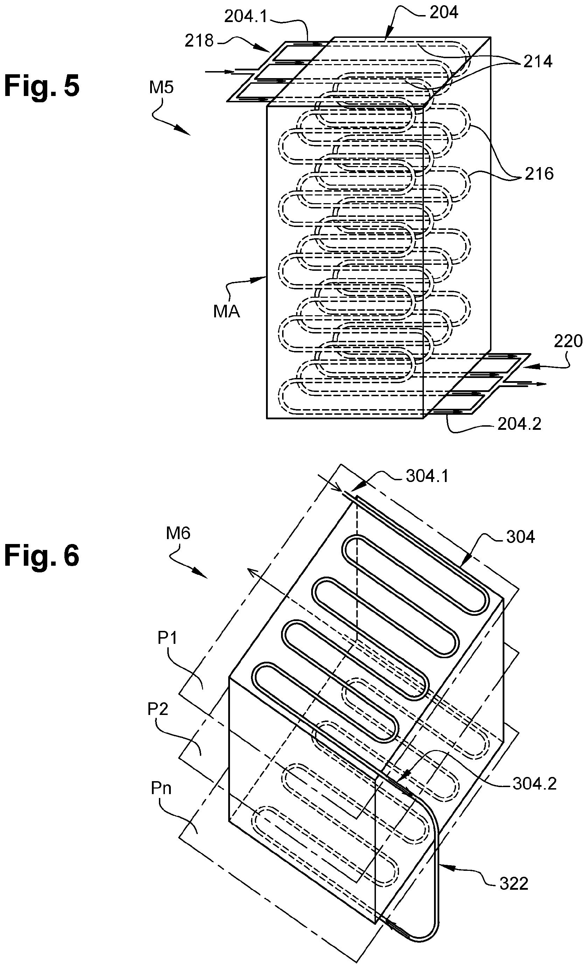

Sur la figure 5, on peut voir un autre exemple de module M5 dans lequel les tubes 204 présentent une forme de serpentin avec des portions 214 parallèles reliées par des coudes 216 entre les deux extrémités du tube 204.1, 204.2. Dans cet exemple, le module comporte quatre tubes 204 disposés dans des plans parallèles distincts verticaux et chaque tube 204 comporte neuf portions rectilignes 214 parallèles, i.e. le fluide caloporteur circule en effectuant neuf passes dans la matrice poreuse.

Dans cet exemple les portions droites 214 sont horizontales mais toute autre orientation est envisageable. En outre chaque tube est contenu dans un plan. En variante, il peut être envisagé de réaliser des tubes contenus dans plusieurs plans. Dans cet exemple, les tubes sont connectés en parallèle par des nourrices d'alimentation/de collecte 218, 220, selon qu'il s'agisse d'une phase de charge et une phase de décharge.

La configuration multi-passes permet d'augmenter la vitesse du fluide caloporteur, donc le coefficient d'échange thermique convectif du fluide caloporteur, et donc le coefficient d'échange global entre le fluide caloporteur et le matériau MCP.

De préférence, le sens de circulation du fluide caloporteur lors des phases de charge et de décharge est tel que le matériau MCP peut changer de volume lors des changements de phase en appliquant des contraintes réduites, voire sans appliquer de contraintes à la structure.

Dans le cas d'un matériau MCP dont le volume augmente lors du passage à l'état liquide, de préférence l'alimentation en caloporteur chaud s'effectue par la partie supérieure du module, ainsi le matériau MCP situé dans la partie supérieure du module peut se dilater vers la surface libre. L'alimentation en fluide froid s'effectue alors de préférence par le bas du module.

Sur la figure 6, on peut voir un autre exemple de module de stockage thermique M6 comportant des tubes 304 de type multi-passes, chacun contenu dans un plan horizontal. De préférence, les tubes 304 sont connectés hydrauliquement en série. De préférence, la connexion en série est réalisée par des connecteurs 322 situés à l'extérieur de la matrice. Les connecteurs sont par exemple rapportés après le moulage de la matrice autour des tubes 304.

C'est le même caloporteur qui circule dans les différents tubes. De préférence et comme cela a été expliqué ci-dessus, le fluide caloporteur chaud circule tout d'abord dans le tube situé tout en haut du module puis successivement dans les autres tubes.

Dans cette configuration, le fluide caloporteur pénètre dans le module par l'extrémité 304.1 du tube 304 et circule dans un premier plan P1 supérieur à travers toute la section du module dans un plan horizontal, sort du tube 304 par l'extrémité 304.2 et de la matrice, circule dans le connecteur 322 et pénètre dans le tube situé dans le plan P2 et serpente dans le plan P2 et ainsi de suite jusqu'à rejoindre le tube situé dans le plan Pn, et enfin sort du module, n étant un entier positif.

De préférence, l'alimentation en fluide caloporteur chaud est réalisée par le tube situé en partie supérieure du module.

En variante, les tubes serpentant dans un plan peuvent être remplacés par des plaques d'échangeur intégrées dans la matrice poreuse. Les plaques d'échangeur sont de préférence orientées verticalement.

Il sera compris que l'on cherche de préférence à assurer une charge et une décharge et donc une fusion et une solidification du matériau MCP dans une direction verticale et de préférence du haut vers le bas et du bas vers le haut respectivement. Néanmoins, en variante les tubes peuvent être répartis de sorte que la charge et la décharge se fassent dans une direction principalement horizontale, le module est alors configuré pour que la fusion et la solidification du matériau MCP n'appliquent pas ou peu de contrainte mécanique à la matrice poreuse.

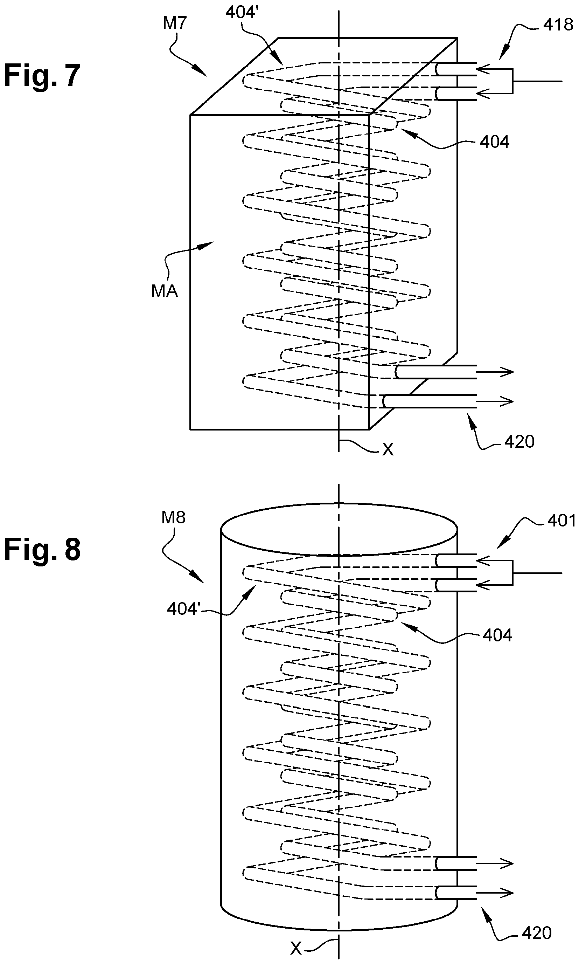

Sur la figure 7, on peut voir un autre exemple de réalisation de module M7, dans lequel les tubes 404, 404' sont cintrés de sorte à former des spires tournant autour de l'axe longitudinal X. Dans cet exemple deux tubes de diamètres de spires différents. Le tube 404 est disposé à l'intérieur du tube 404' de manière concentrique. Les deux tubes sont alimentés en parallèle par une nourrice d'alimentation 418 et le fluide sortant des tubes est collecté par une nourrice d'évacuation 420.

Le tube 404 situé à l'intérieur assure principalement un transfert de chaleur au MCP situé le plus à l'intérieur du module, et le tube 404' situé à l'extérieur assure principalement un transfert de chaleur à la partie radialement la plus extérieur du matériau MCP. Dans cet exemple, le module a une forme parallélépipédique.

Sur la figure 8, on peut voir une variante dans laquelle le module M8 a avantageusement une forme cylindrique à section circulaire, ce qui permet une distribution de la chaleur au matériau MCP et une collecte de la chaleur du matériau MCP plus uniforme, notamment dans le matériau MCP situé à l'extérieur du tube extérieur.

La matrice poreuse et plus généralement le module peuvent présenter toute forme, ce qui permet de s'adapter à des contraintes de capacité de stockage d'énergie thermique et/ou d'intégration dans son environnement d'exploitation.

Dans les exemples décrits les tubes ont une section circulaire. En variante, il présente une forme aplatie au niveau de la partie contenue dans la matrice poreuse, et des extrémités de connexion à section circulaire facilitant le raccord des tubes au distributeur et collecteur.

Dans les exemples décrits, le fluide circulant dans les tubes est issu de la même source chaude ou source froide, c'est donc le même fluide qui circule dans tous les tubes en parallèle ou en série.

Dans un autre exemple de réalisation, le module de stockage comporte plusieurs circuits séparés de circulation de fluide caloporteur, par exemple pour faire circuler des fluides caloporteurs différents. En effet certaines applications requièrent de disposer d'au moins deux échangeurs thermiques internes distincts, alimentés chacun par un fluide caloporteur différent. Par exemple, un premier fluide caloporteur est utilisé pour apporter de la chaleur au stockage thermique entraînant la fusion du matériau MCP, tandis que le second fluide caloporteur est utilisé pour décharger le stockage thermique en récupérant la chaleur générée par la solidification du matériau MCP. Cette configuration est par exemple rencontrée lorsque le système de stockage thermique est à l'interface entre une source qui produit de la chaleur, par exemple une pompe à chaleur, et un système qui convertit la chaleur en électricité au moment où c'est le plus opportun, par exemple une machine à cycle organique de Rankine. Les fluides caloporteurs rencontrés dans ce type de configuration sont souvent des fluides frigorifiques diphasiques. Un tel moyen de stockage thermique, pourvu de deux échangeurs thermiques internes distincts, est également particulièrement intéressant sur des réseaux de chaleur où il est avantageusement positionné à l'interface entre le circuit primaire plus haut en température et le circuit secondaire plus bas en température. Suivant ce schéma d'intégration, le moyen de stockage thermique fonctionnerait en parallèle de l'échangeur thermique usuel qui assure le transfert de chaleur entre le circuit primaire et le circuit secondaire. Dans cette conception, le premier échangeur thermique interne du moyen de stockage thermique est alimenté par le fluide caloporteur circulant dans le circuit primaire, tandis que le deuxième échangeur thermique interne du moyen de stockage thermique est alimenté par le fluide caloporteur circulant dans le circuit secondaire. Ainsi en considérant que le circuit primaire est plus élevé en température que le circuit secondaire, un tel moyen de stockage thermique à l'interface entre les deux circuits, est alimenté par le circuit primaire pour sa charge, i.e. entraînant la fusion du matériau MCP et donc la récupération et le stockage de la chaleur, puis serait alimenté par le circuit secondaire pour sa décharge, i.e. entraînant la cristallisation du matériau MCP et donc la restitution de la chaleur stockée. Le matériau MCP est choisi en fonction de sa température de changement d'état liquide/solide de sorte à ce que la température d'alimentation du circuit primaire soit suffisante pour entraîner la fusion du matériau MCP et la température d'alimentation du circuit secondaire soit suffisante pour entraîner la cristallisation du matériau MCP.

Dans un exemple, les échangeurs thermiques sont réalisés au moyen de deux tubes coaxiaux, le premier fluide caloporteur circule dans le tube interne tandis que le deuxième fluide caloporteur circule dans le canal annulaire formé entre le tube interne et le tube externe, le premier fluide échange alors de la chaleur avec le matériau MCP à travers les deux tubes et le premier fluide caloporteur. Dans un autre exemple, les deux échangeurs thermiques sont distincts et de structures ou non différentes. Ainsi il est possible de choisir la structure de chaque échangeur thermique qui soit la plus efficace en matière de transfert thermique pour le fluide caloporteur circulant dans chaque échangeur thermique.

Comme cela a été déjà mentionné ci-dessus, l'invention mettant en oeuvre une matrice poreuse moulée autour d'un ou de plusieurs échangeurs thermiques offre une grande liberté en matière de forme et de géométrie finale des modules de stockage thermique de ceux-ci. De manière très avantageuse, les modules peuvent être de forme parallélépipédique, ce qui permet de faciliter leur intégration et de maximiser leur volume utile par rapport à la surface qu'ils occupent au sol, ce qui réduit l'espace occupé au sol par le système de stockage thermique. Au contraire, les systèmes de stockage de l'état de la technique comportent généralement des calandres cylindriques pour contenir le matériau MCP, présentant une emprise au sol importante par rapport à leur volume. Par ailleurs, cette forme parallélépipédique permet d'associer plusieurs modules en les juxtaposant et/ou empilant aisément et de s'adapter au mieux à l'espace au sol disponible, et en les connectant fluidiquement en parallèle ou en série.

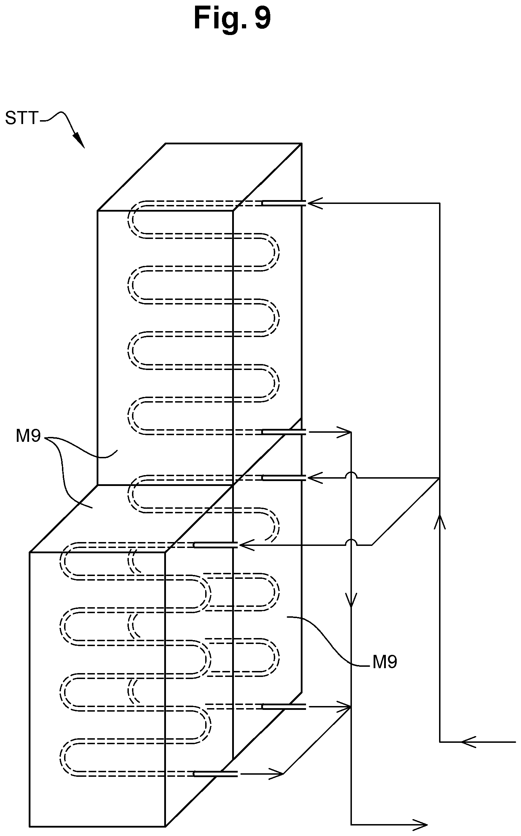

Sur la figure 9, on peut voir schématisé un système de stockage thermique STT comportant trois modules M9, deux modules M9 étant empilés et deux modules M9 étant juxtaposé et en contact par une face extérieure. Les trois modules M9 sont connectés en parallèle à un réseau. Ils sont alimentés en fluide caloporteur en parallèle par le réseau et déchargent le fluide en parallèle dans le réseau. En variante, ils peuvent être connectés en série ou certains sont connectés en parallèle et d'autres connectés en série.

Il peut être envisagé de pouvoir isoler hydrauliquement un ou plusieurs modules, par exemple au moyen de vanne, pour que ceux-ci ne stockent pas de la chaleur ou n'en délivre pas en fonction de la quantité de chaleur à stocker ou à récupérer respectivement, par exemple en fonction des saisons. Un tel système de stockage offre une grande souplesse de fonctionnement.

A tire d'exemple, chaque module peut présenter les dimensions suivantes : 0,5 m x 0,5 m x 1 m et un volume externe (hors raccordements hydrauliques et hors calorifuge) d'environ 0,25 m³. De telles dimensions permettent un empilement aisé des modules. La matrice poreuse peut présenter une porosité comprise entre 80% et 95% occupée quasi complètement par le matériau MCP, un tel module peut alors contenir environ entre 200 litres et 237 litres de matériau MCP. Chaque module peut stocker une énergie thermique comprise entre 10 et 20 kWatt.heure.

A titre d'exemple, en considérant une sous-station d'un réseau de chaleur disposant contre une paroi d'un volume libre pour du stockage de chaleur de 0,5 m x 1 m au sol sur une hauteur de 3 m, il serait possible d'installer une unité de stockage thermique composée d'un empilement de six modules unitaires présentant un volume total de 1,5 m³. Un même système composé de deux cuves cylindriques de conception traditionnelle ne présenterait qu'un volume total de 1,17 m³, soit au minimum 20% de de capacité de stockage d'énergie thermique en moins.

L'invention permet de libérer de l'espace pour stocker du matériau MCP.

Le procédé mis en oeuvre pour fabriquer le dispositif de stockage selon invention permet un surmoulage de la mousse directement sur les tubes, ce qui n'était pas possible avec tout autre type de mousse stochastique.

Le surmoulage de la mousse en aluminium sur les tubes en acier assure une mise sous contrainte de l'interface acier/aluminium garantissant une liaison métal/métal intime et durable.

L'intégration des échangeurs thermiques dans la mousse permet un meilleur transfert thermique entre le caloporteur et le matériau MCP, ce qui permet de réduire le nombre d'échangeurs thermiques, par exemple le nombre de tubes. Le fait d'utiliser moins de tubes offre la possibilité d'utiliser des nourrices hydrauliques pour la distribution hydraulique et la collecte hydraulique du fluide caloporteur aux extrémités de connexion des échangeurs thermiques. L'utilisation de nourrices hydrauliques offre plusieurs avantages. Tout d'abord, elle permet de s'affranchir de l'utilisation de boîtes à eau impliquant le recours à des plaques pour réaliser l'interface avec le faisceau de tubes souvent utilisées dans la conception traditionnelle. L'utilisation de plaques, également appelées plaques collectrices de tubes, implique de nombreuses et coûteuses opérations d'assemblage (obtenues par soudage ou par dudgeonnage) pour réaliser la liaison entre la/les plaque(s)) et les tubes. Il faut ainsi compter deux opérations d'assemblage par tube. Ces opérations d'assemblage peuvent en outre constituer des zones fragilisées dès l'instant où elles font intervenir des opérations de soudage.

L'utilisation de nourrices hydrauliques simplifie également les opérations d'assemblage. Les soudures sont réalisées à l'extérieur du module de stockage thermique ente les extrémités de connexion des échangeurs thermiques et les nourrices.

La liaison par soudure se fait avantageusement « *bout-à-bout* » ou par l'utilisation de raccords, par exemple de type union, offrant une bien meilleure résistance mécanique que des liaisons tubes sur plaques tubulaires usuelles. D'autre part, la possibilité de réaliser les liaisons soudées à l'extérieur du module facilite leur accessibilité, notamment pour les opérations de contrôles périodiques / inspection. En outre, le fait d'éviter l'usage de boîtes à eau pour la distribution et la collecte hydraulique du fluide caloporteur du moule en utilisant à la place des nourrices hydrauliques permet de réduire le volume de fluide caloporteur contenu dans ces composants. Dans l'éventualité où le fluide caloporteur est pressurisé, la possibilité de réduire le volume contenu dans le module permet d'alléger et de limiter les contraintes sur la conception, notamment dans le cas d'utilisation de fluide sous pression.

La réduction du nombre de tubes permet de ne pas avoir recours à des inserts, réduisant le coût et la complexité du module. La densité énergétique de stockage du module peut être augmentée dans la mesure où du volume libéré par les tubes en moins peut être remplacé par du matériau MCP. L'absence d'inserts dans les tubes peut réduire les risques d'encrassement dans les tubes dans certains cas.

Un exemple de procédé de fabrication du module de stockage thermique M1 va maintenant être décrit. Les figures 10A à 10F représentent différentes étapes de manière schématique d'un exemple procédé de fabrication d'un module de stockage thermique. Tout d'abord on fournit des noyaux qui sont fabriqués par agrégation d'éléments au moyen d'un liant, par exemple un polyuréthane. Les éléments sont placés dans un moule de forme correspondante à celle de la préforme PR que l'on souhaite réaliser afin d'obtenir les noyaux N. Pour garantir un bon empilement des noyaux dans un moule on dépose les éléments couche par couche et le nombre de couches dépend de la forme et de la taille de la préforme PR.

Les tubes en acier sont placés dans les couches de noyaux N, un espace prévu à cet effet est intégré, par exemple par CAO. Autour de chaque tube et entre les noyaux une couche d'aluminium vient enrober le tube d'acier pour maximiser le surmoulage et la liaison thermique (Figure 10B).

La préforme PR est disposée dans un moule MO (figure 10C). Le moule est par exemple en sable ou en un matériau métallique. Le moule et la disposition de la préforme dans le moule sont tels qu'un espace vide E entre la préforme et une paroi interne du moule MO est formé de sorte que, lors du moulage, une paroi pleine 6 dans le matériau de la matrice sera formée sur une face de la matrice poreuse et autour des extrémités des tubes.

Lors d'une étape suivante représentée sur la figure 10D, un bain de métal B, par exemple de l'aluminium est préparé puis le métal liquide est infiltré dans la préforme. Le système de remplissage et la température du métal sont adaptés à la configuration de la matrice à fabriquer. Un logiciel permettant de calculer les distances d'infiltration de métal peut être utilisé. Le métal est solidifié (Figure 10E), à ce stade, la préforme est toujours contenue dans la pièce et doit donc être détruite. Pour ce faire, on plonge la pièce dans un solvant, de sorte que la préforme se dissolve. La pièce obtenue après destruction de la préforme présentes deux types de zones : des zones en mousse creuse, à la place de la préforme, et des zones pleines en alliage à la place de l'espace vide. La pièce peut présenter ainsi une « peau » autour de la zone en mousse (figure 10F).

Le métal est parachevé et le module est terminé notamment en rapportant les autres parties de la cuve, par exemple par soudage.

Le module peut être ensuite rempli de matériau MCP. Ce remplissage du module en MCP peut avoir lieu lorsque le module est en place et connecté au réseau de fluide caloporteur pour assurer l'apport de chaleur nécessaire à la fusion du MCP. Lors du remplissage le MCP peut être apporté sous forme de poudre, sous forme de granules de quelques millimètres de diamètre (généralement entre 1 mm et 3 mm) ou bien directement sous forme liquide, i.e. après avoir été préalablement chauffé pour d'être fondu).

Le procédé de fabrication de la matrice peut comporter un contrôle de la forme des noyaux, un contrôle de la porosité du métal avant coulée, une mesure de la température du métal avant coulée, une vérification de la métallurgie du métal avant coulée.

Selon un autre mode de réalisation préféré de l'invention, représenté sur les figures 11 et 12, la matrice MA est équipée à certaines de ses arêtes de montants 15. Il s'agit ici de quatre montants 15, en forme de longerons, équipant les quatre arêtes de matrice orientées verticalement.

Les montants 15, également parallèles entre eux et orientés verticalement, peuvent être réalisés dans un matériau différent de celui de la matrice MA. Par exemple, pour conférer une meilleure résistance mécanique au module, et donc remplir une fonction structurale, de l'acier peut être employé, ou encore tout autre matériau disposant de telles propriétés.

Les montants 15 adoptent de préférence une section carrée ou rectangulaire, pleine ou creuse, par exemple sous forme de profilés. Ils peuvent être usinés, percés ou taraudés pour faciliter l'assemblage d'éventuels éléments sur leur surface, tels que des pieds de support, des éléments d'emboîtement, des organes de manutention comme des manilles, etc.

Suivant un autre mode de réalisation, les longerons peuvent être également percés sur leur paroi en contact avec la matrice MA de sorte à permettre, lors de l'opération de moulage, la pénétration du matériau (en fusion) de la matrice à travers ou à l'intérieur des longerons. Après la phase de solidification du matériau de la matrice, ce mode de réalisation permettra de rendre solidaire le(s) longeron(s) 15 avec la matrice MA. Bien entendu, suivant ce mode de réalisation, les longerons sont insérés / assemblés avec les noyaux lors de leur montage avant la coulée du matériau de la matrice. Ce mode de réalisation rend définitivement solidaire et indémontable les longerons et la matrice.

Les quatre montants 15 s'intègrent parfaitement dans la géométrie parallélépipédique de la matrice MA et de l'ensemble du module. Pour ce faire, la matrice MA présente un retrait / évidement de matière au niveau de chacune de ses arêtes concernées, de forme complémentaire de celle du montant reçu. Ce retrait 17, également dénommé épargne, présente donc une forme en angle droit, ouvert vers l'extérieur du module. L'assemblage est tel que les surfaces extérieures des montants 15 affleurent ou affleurent sensiblement les surfaces extérieures adjacentes de la matrice.

Pour l'intégration des montants 15, deux possibilités sont offertes. La première consiste à intégrer les montants à la matrice MA directement pendant le moulage de celle-ci. Dans ce cas, les montants 15 peuvent présenter une surface structurée pour favoriser l'adhésion et la solidarité avec la matrice poreuse moulée sur ces montants.

La seconde possibilité réside dans l'intégration de ces montants 15 seulement après avoir obtenu la matrice MA par moulage. Dans ce cas, l'obtention des retraits 17 sur la matrice MA s'effectue en adaptant la géométrie des noyaux dans le moule. Ces retraits sont alors préférentiellement définis avec des zones pleines, comme celles des parois pleines qui définissent tout ou partie de la cuve 2 à la surface extérieure de la matrice.

Dans une alternative montrée sur la figure 13, le module M1 est analogue au module M3 montré sur la figure 3, en ce sens que la cuve 2 est formée à l'aide d'un corps de cuve 2a, fermé par un couvercle 2b recouvrant une face libre 10 de la matrice poreuse MA. Dans cette configuration, la présence des montants 15 aux arêtes verticales de la matrice MA permet de faciliter et de renforcer la fixation du couvercle 2b sur le module.

Selon une autre alternative représentée sur la figure 14, un cadre 19 est rapporté entre le couvercle 2b et les extrémités hautes des montants 15, sur lesquelles ce cadre 19 est rapporté. Ce cadre présente par exemple une section en forme de L, facilitant l'assemblage par bridage mécanique du couvercle 2b sur le cadre 19.

Selon encore une autre alternative montrée sur la figure 15, certaines des parois 6 formant le corps de cuve ne sont plus réalisées directement par moulage et d'un seul tenant avec la matrice MA, mais rapportées sur le module après le moulage de la matrice. Les montants 15 et le cadre 19 facilitent alors leur assemblage et renforce la tenue mécanique de l'ensemble obtenu. D'ailleurs, un autre cadre analogue 19 peut être agencé sur la face opposée de la matrice, et fixé aux extrémités basses des montants 15 pour recevoir l'une des plaques pleines rapportées destinées à former la cuve. Dans ce cas de figure, les efforts transitant par les montants 15 peuvent être convenablement répartis dans chacun des cadres 19.

Pour la fixation des plaques pleines 6, les montants 15 peuvent être pré-équipés de moyens de fixation tels que des goujons filetés (non représentés), facilitant le montage par bridage de ces parois 6 qui sont rapportées, et non réalisées d'un seul tenant avec la matrice MA. Une surface extérieure lisse peut aussi être ménagée sur ces montants 15, de manière à recevoir un joint d'étanchéité écrasé entre ces montants et les plaques pleines 6 qu'ils supportent.

Bien entendu, diverses modifications peuvent être apportées par l'homme du métier à l'invention qui vient d'être décrite, uniquement à titre d'exemples non limitatifs, et dont la portée est définie par les revendications annexées.

**Revendications**

1. Module pour stockage thermique par matériau à changement de phase comportant une cuve (2), au moins un échangeur thermique (4, 204, 304) comportant des première (4.1) et deuxième (4.2) extrémités de connexion destinées à être connectées à un réseau de fluide caloporteur, lesdites première (4.1) et deuxième (4.2) extrémités de connexion pénétrant et débouchant de la cuve (2), une structure (S) reçue dans la cuve et destinée à contenir un matériau à changement de phase, ladite structure (S) comprenant une matrice poreuse (MA, MA') à cellules communicantes traversée par ledit échangeur thermique (4) et en contact avec la surface extérieure dudit échangeur thermique (4, 204, 304), ladite matrice (MA, MA') étant obtenue par moulage autour dudit échangeur thermique (4, 204, 304), **caractérisé en ce que** ladite cuve (2) comprenant au moins une paroi (6) en matériau formée par moulage directement sur la matrice poreuse (MA, MA').

2. Module selon la revendication 1, dans lequel la paroi est formée directement lors du moulage de la matrice et d'un seul tenant avec la matrice (MA, MA').

3. Module selon la revendication 1, dans lequel la paroi est formée sur la matrice après le moulage de celle-ci, et, de préférence, la au moins une paroi est en un matériau présentant une conductivité thermique inférieure à celle de la matrice.

4. Module selon l'une des revendications 1 à 3, dans lequel ladite paroi (6) est traversée par au moins la première extrémité (4.2) dudit échangeur thermique.

5. Module selon l'une des revendications 1 à 4, dans lequel la matrice poreuse est en matériau métallique, par exemple en aluminium ou alliage d'aluminium.

6. Module selon l'une des revendications 1 à 5, dans lequel la matrice (MA') comporte une première zone (ZI) de première porosité en contact avec la surface extérieure de l'échangeur thermique (4, 204, 304) et une deuxième zone (ZII) de deuxième porosité entourant la première zone (ZI), la deuxième porosité étant supérieure à la première porosité.

7. Module selon l'une des revendications 1 à 6, comportant plusieurs échangeurs thermiques (4, 204, 304) configurés pour être connectés en parallèle à un réseau de fluide caloporteur et dans lequel les premières extrémités de connexion sont connectées à une nourrice hydraulique et les deuxièmes extrémités de connexion sont connectées à une deuxième nourrice hydraulique.

8. Module selon l'une des revendications 1 à 7, dans lequel ledit échangeur thermique (4, 204, 304) est un tube.

9. Module selon la revendication 8, dans lequel le tube (204, 304) est configuré de sorte à serpenter dans la matrice (MA), et, de préférence, il comporte plusieurs tubes (204), chaque tube (204) étant contenu dans un plan, lesdits plans étant sensiblement verticaux, et dans lequel lesdits tubes (204) sont configurés pour être connectés en parallèle à un réseau de fluide caloporteur.

10. Module selon la revendication 8, comportant plusieurs tubes (304), chaque tube (304) étant contenu dans un plan, lesdits plans étant sensiblement horizontaux et dans lequel lesdits tubes (304) sont connectés en série, lesdits tubes (304) étant de préférence connectés par des connecteurs (322) disposés à l'extérieur de la matrice (MA).

11. Module selon l'une des revendications précédentes, dans lequel la matrice (MA) est de forme parallélépipédique, et, de préférence, la matrice (MA) est équipée, à au moins l'une de ses arêtes, d'un montant, et, de préférence, dans lequel la cuve comporte cinq parois en contact avec une face de la matrice et une paroi distante d'une face (110) de matrice de sorte à ménager un volume libre entre ladite face et ladite paroi, et, de préférence, lesdites cinq parois sont en matériau métallique formées directement lors du moulage et d'un seul tenant avec la matrice ou sont formées sur la matrice après le moulage de celle-ci.

12. Système de stockage thermique comportant au moins un module selon l'une des revendications précédentes et du matériau à changement de phase remplissant les cellules de la matrice.

13. Système de stockage thermique selon la revendication précédente, dans lequel ledit module comporte au moins deux échangeurs thermiques et dans lequel chaque échangeur est alimenté par un fluide caloporteur différent ou provenant d'un réseau de chaleur différent.

14. Système de stockage thermique selon la revendication 12 ou 13, comportant plusieurs modules, une partie des modules étant empilés et/ou une autre partie des modules étant juxtaposés, et, de préférence, dans lequel les modules sont connectés à un réseau de fluide caloporteur en parallèle.

15. Procédé de fabrication d'un module selon l'une des revendications 1 à 11 comportant :

   - la fourniture d'une préforme comprenant des plaques de noyaux et au moins un échangeur thermique entre les noyaux,
   - mise en place de la préforme dans un moule,
   - introduction d'un métal liquide dans la préforme,
   - solidification du métal,
   - retrait des noyaux,

et dans lequel la préforme comporte de préférence un volume libre entre les noyaux et l'échangeur thermique.

**Patentansprüche**

1. Modul zur Wärmespeicherung durch ein Phasenwechselmaterial, umfassend einen Behälter (2), mindestens einen Wärmetauscher (4, 204, 304) mit ersten (4.1) und zweiten (4.2) Anschlussenden, die dazu bestimmt sind, mit einem Wärmeträgerfluidnetz verbunden zu werden, wobei die ersten (4.1) und zweiten (4.2) Anschlussenden in den Behälter (2) eindringen und aus ihm herauslaufen, eine Struktur (S), die in den Behälter aufgenommen wird und dazu bestimmt ist, ein Phasenwechselmaterial zu enthalten, wobei die Struktur (S) eine poröse Matrix (MA, MA') mit kommunizierenden Zellen umfasst, die durch den Wärmetauscher (4) verläuft und in Kontakt mit der Außenfläche des Wärmetauschers (4, 204, 304) ist, wobei die Matrix (MA, MA') durch Formen um den Wärmetauscher (4, 204, 304) herum erhalten wird, **dadurch gekennzeichnet, dass** der Behälter (2) mindestens eine Wand (6) aus einem Material umfasst, die durch direktes Formen auf der porösen Matrix (MA, MA') gebildet wird.

2. Modul nach Anspruch 1, wobei die Wand direkt beim Formen der Matrix und einstückig mit der Matrix (MA, MA') gebildet wird.

3. Modul nach Anspruch 1, wobei die Wand nach dem Formen der Matrix auf dieser gebildet wird und die mindestens eine Wand vorzugsweise aus einem Material besteht, das eine niedrigere Wärmeleitfähigkeit als die der Matrix aufweist.

4. Modul nach einem der Ansprüche 1 bis 3, wobei die Wand (6) von mindestens dem ersten Ende (4.2) des Wärmetauschers durchquert wird.

5. Modul nach einem der Ansprüche 1 bis 4, wobei die poröse Matrix aus einem metallischen Material besteht, beispielsweise aus Aluminium oder einer Aluminiumlegierung.

6. Modul nach einem der Ansprüche 1 bis 5, wobei die Matrix (MA') eine erste Zone (ZI) mit einer ersten Porosität in Kontakt mit der Außenfläche des Wärmetauschers (4, 204, 304) und eine zweite Zone (ZII) mit einer zweiten Porosität, die die erste Zone (ZI) umgibt, umfasst, wobei die zweite Porosität größer als die erste Porosität ist.

7. Modul nach einem der Ansprüche 1 bis 6, umfassend mehrere Wärmetauscher (4, 204, 304), die so konfiguriert sind, dass sie parallel mit einem Wärmeträgerfluidnetz verbunden sind, und wobei die ersten Anschlussenden mit einer hydraulischen Zufuhr verbunden sind und die zweiten Anschlussenden mit einer zweiten hydraulischen Zufuhr verbunden sind.

8. Modul nach einem der Ansprüche 1 bis 7, wobei der Wärmetauscher (4, 204, 304) ein Rohr ist.

9. Modul nach Anspruch 8, wobei das Rohr (204, 304) so konfiguriert ist, dass es sich in der Matrix (MA) windet und vorzugsweise mehrere Rohre (204) umfasst, wobei jedes Rohr (204) in einer Ebene enthalten ist, wobei die Ebenen im Wesentlichen vertikal sind, und wobei die Rohre (204) so konfiguriert sind, dass sie parallel mit einem Wärmeträgerfluidnetz verbunden sind.

10. Modul nach Anspruch 8, umfassend mehrere Rohre (304), wobei jedes Rohr (304) in einer Ebene enthalten ist, wobei die Ebenen im Wesentlichen horizontal sind, und wobei die Rohre (304) in Reihe verbunden sind, wobei die Rohre (304) vorzugsweise durch Verbinder (322), die außerhalb der Matrix (MA) angeordnet sind, verbunden sind.

11. Modul nach einem der vorhergehenden Ansprüche, wobei die Matrix (MA) quaderförmig ist, und die Matrix (MA) vorzugsweise an mindestens einer ihrer Kanten mit einer Höhe ausgestattet ist, und wobei der Behälter vorzugsweise fünf Wände in Kontakt mit einer Fläche der Matrix und eine von einer Fläche (110) der Matrix entfernte Wand aufweist, um ein freies Volumen zwischen der Fläche und der Wand bereitzustellen, und wobei die fünf Wände vorzugsweise aus einem metallischen Material bestehen, die direkt beim Formen der Matrix und einstückig mit dieser gebildet werden oder auf der Matrix nach dem Formen dieser gebildet werden.

12. Wärmespeichersystem, umfassend mindestens ein Modul nach einem der vorhergehenden Ansprüche und das Phasenwechselmaterial, das die Zellen der Matrix füllt.

13. Wärmespeichersystem nach dem vorhergehenden Anspruch, wobei das Modul mindestens zwei Wärmetauscher umfasst und wobei jeder Wärmetauscher mit einem anderen Wärmeträgerfluid oder aus einem anderen Wärmenetz versorgt wird.

14. Wärmespeichersystem nach Anspruch 12 oder 13, umfassend mehrere Module, wobei ein Teil der Module gestapelt und/oder ein anderer Teil der Module nebeneinander angeordnet sind, und wobei die Module vorzugsweise parallel mit einem Wärmeträgerfluidnetz verbunden sind.

15. Verfahren zur Herstellung eines Moduls nach einem der Ansprüche 1 bis 11, umfassend:

    - Bereitstellen eines Rohlings, der Kernplatten und mindestens einen Wärmetauscher zwischen den Kernen umfasst,
    - Einbringen des Rohlings in ein Modul,
    - Einführen eines flüssigen Metalls in den Rohling,
    - Erstarren des Metalls,
    - Entfernen der Kerne,

und wobei der Rohling vorzugsweise ein freies Volumen zwischen den Kernen und dem Wärmetauscher umfasst.

**Claims**

1. A module for thermal storage by a phase-change material including a vat (2), at least one heat-exchanger (4, 204, 304) including first (4.1) and second (4.2) connecting ends intended to be connected to

**13**

a heat-transfer fluid network, said first (4.1) and second (4.2) connecting ends penetrating and opening into the vat (2), a structure (S) received in the vat and intended to contain a phase-change material, said structure (S) comprising a porous matrix (MA, MA') with communicating cells crossed by said heat-exchanger (4) and in contact with the external surface of said heat-exchanger (4, 204, 304), said matrix (MA, MA') being obtained by moulding around said heat-exchanger (4, 204, 304), **characterised in that** said vat (2) comprising at least one wall (6) made of a material formed by moulding directly on the porous matrix (MA, MA').

2. The module according to claim 1, wherein the wall is formed directly during moulding of the matrix and integral with the matrix (MA, MA').

3. The module according to claim 1, wherein the wall is formed on the matrix after moulding thereof, and, preferably, the at least one wall is made of a material having a thermal conductivity lower than that of the matrix.

4. The module according to one of claims 1 to 3, wherein said wall (6) is crossed by at least the first end (4.2) of said heat-exchanger.

5. The module according to one of claims 1 to 4, wherein the porous matrix is made of a metallic material, for example of aluminium or of an aluminium alloy.

6. The module according to one of claims 1 to 5, wherein the matrix (MA') includes a first area (ZI) with a first porosity in contact with the external surface of the heat-exchanger (4, 204, 304) and a second area (ZII) with a second porosity surrounding the first area (ZI), the second porosity being higher than the first porosity.

7. The module according to one of claims 1 to 6, including several heat-exchangers (4, 204, 304) configured to be connected in parallel to a heat-transfer fluid network and wherein the first connecting ends are connected to a hydraulic feeder and the second connecting ends are connected to a second hydraulic feeder.

8. The module according to one of claims 1 to 7, wherein said heat-exchanger (4, 204, 304) is a tube.

9. The module according to claim 8, wherein the tube (204, 304) is configured so as to wind in the matrix (MA), and, preferably, it includes several tubes (204), each tube (204) being contained in a plane, said planes being substantially vertical, and wherein said tubes (204) are configured to be connected in parallel to a heat-transfer fluid network.

10. The module according to claim 8, including several tubes (304), each tube (304) being contained in a plane, said planes being substantially horizontal and wherein said tubes (304) are connected in series, said tubes (304) being preferably connected by connectors (322) disposed outside the matrix (MA).

11. The module according to one of the preceding claims, wherein the matrix (MA) is parallelepiped shaped, and preferably, the matrix (MA) is equipped, at least at one of its edges, with an upright, and preferably, the vat includes five walls in contact with a face of the matrix and a wall distant from a matrix face (110) so as to clear a free volume between said face and said wall, and preferably, said five walls are made of a metallic material formed directly during moulding and integral with the matrix or are formed on the matrix after moulding thereof.

12. A thermal storage system including at least one module according to one of the preceding claims and phase-change material filling the cells of the matrix.

13. The thermal storage system according to the preceding claim, wherein said module includes at least two heat-exchangers and wherein each exchanger is supplied with a heat-transfer fluid that is different or originating from a different heat network.

14. The thermal storage system according to claim 12 or 13, including several modules, part of the modules being stacked and/or another part of the modules being juxtaposed, and, preferably, wherein the modules are connected to a heat-transfer fluid network in parallel.

15. A method for manufacturing a module according to one of claims 1 to 11, including:

    - the provision of a preform comprising plates of cores and at least one heat-exchanger between the cores,
    - set-up of the preform in a mould,
    - introduction of a liquid metal in the preform,
    - solidification of the metal,
    - removal of the cores,

and wherein the preform includes a free volume between the cores and the heat-exchanger.

**Fig. 1A**

**Fig. 1B**

**Fig. 1C**

**Fig. 2**

ZI

MA'

ZII

M2

2

4

4.1

6

4.1

X

**Fig. 3**

M3

10

MA

4.1

8

6

4.2

**Fig. 4**

112

110

MA

M4

106

108

Fig. 5

Fig. 6

**Fig. 7**

**Fig. 8**

# Fig. 9

# Fig. 10A

# Fig. 10B

# Fig. 10C

# Fig. 10D

# Fig. 10E

# Fig. 10F

**Fig. 11**

**Fig. 12**

**Fig. 13**

**Fig. 14**

**Fig. 15**

## RÉFÉRENCES CITÉES DANS LA DESCRIPTION

### Documents brevets cités dans la description

- EP 2904343 A
- CN 111765791 A